# EUROPÄISCHE PATENTSCHRIFT

(11) **EP 1 434 726 B1**
(45) Veröffentlichungstag und Bekanntmachung des Hinweises auf die Patenterteilung: **02.03.2005**
(21) Anmeldenummer: 02774369.9
(22) Anmeldetag: 14.09.2002
(51) Int. Cl.: B65G 47/22

(54) **VORRICHTUNG ZUR GEBINDEAUSRICHTUNG**
DEVICE FOR CONTAINER ALIGNMENT
DISPOSITIF POUR REDRESSER DES RECIPIENTS

(30) Priorität: 30.11.2001 DE 10158832
(43) Veröffentlichungstag der Anmeldung: 07.07.2004
(73) Patentinhaber: Firma Langguth GmbH, 48308 Senden-Bösensell (DE)
(72) Erfinder: LEHMANN, Rainer, 48303 Nottuln (DE); ECKHOLT, Heinz, 48308 Senden-Ottmarsbocholt (DE)
(74) Vertreter: Habbel, Lutz, Dipl.-Ing.
(86) Internationale Anmeldenummer: PCT/DE2002/003450
(87) Internationale Veröffentlichungsnummer: WO 2003/048011

(56) Entgegenhaltungen:
- WO-A-98/25841
- US-A- 2 245 694
- US-A- 3 225 890

## Beschreibung

Die Erfindung bezieht sich auf eine Vorrichtung zur Gebindeausrichtung mit einer die Gebinde fördernden Transportvorrichtung.

Gebinde, wie z. B. Plastikeimer, die eine ovale, runde oder auch polygonale Form aufweisen, werden nach dem Füllvorgang über eine Transportvorrichtung einer sogenannten Deckelstation zugeführt, in der nunmehr auf das gefüllte Gebinde der Deckel aufgesetzt werden soll.

Die Deckel werden aus einer entsprechenden Zuführvorrichtung zugeführt, in der die Deckel stets die gleiche Lage aufweisen, während die Gebinde auf der Transportvorrichtung nicht immer genau ausgerichtet sind, so dass es erforderlich ist, die Gebinde so auszurichten, dass sie zumindest in der Deckelstation so ausgerichtet sind, dass ein problemloses, maschinelles Aufsetzen der Deckel möglich wird.

Die gleichen Probleme treten bei einer Transportvorrichtung zu einer Etikettiermaschine auf. Auch hier muß der Behälter exakt ausgerichtet werden, um das Etikett ordnungsgemäß anzubringen und einen Versatz des Etikettes zu verhindern.

Auch bei Palettiermaschinen, wo Gebinde auf Paletten gestapelt werden, tritt das Problem auf, dass die Gebinde dem Greifer ausgerichtet zugeführt werden müssen, um ein ordnungsgemäßes Aufstellen der Gebinde auf der Palette und damit ein raumsparendes Lagern der Gebinde auf der Palette zu gestatten.

In der US-A-3 225 890, worauf der Oberbegriff des Anspruchs 1 basiert, wird eine Vorrichtung beschrieben, mit der automatisch die Größe des auf einem Fördeband geförderten Artikels bestimmt wird und gleichzeitig dieser Artikel so verschoben werden kann, daß er mit seinem Mittelpunkt sich auf der Achse der die Vorrichtung fördernden Transportvorrichtung befindet Hierzu sind auf beiden Seiten der Transportvorrichtung Schwenkarme vorgesehen, die unabhängig voneinander angetrieben werden. Das erste, einander gegenüberliegende Schwenkarmpaar hat die Aufgabe, die Größe des sich auf der Transportvorrichtung befindenden Artikels zu bestimmen und das zweite Schwenkarmpaar, das in Transportrichtung dem ersten Schwenkarmpaar folgt, hat die Aufgabe, nunmehr in Abhängigkeit der bestimmten Größe den Artikel auf der Transportvorrichtung so zu verschieben, daß er mittig eingestellt ist.

Mit einer solchen Vorrichtung kann die Mittellage des geförderten Artikels auf der Transportvorrichtung eingestellt werden. Mit einer solchen Vorrichtung kann aber, wenn der geförderte Artikel ovale Form oder polygonale Form hat, eine Ausrichtung der Achse des Artikels mit der Achse der Fördervorrichtung nicht herbeigeführt werden.

Der Erfindung liegt die Aufgabe zugrunde, eine Hilfsvorrichtung zu schaffen, mit der die Gebinde oder sonstigen Behälter auf der Transportvorrichtung so ausgerichtet werden, dass sie der nachfolgenden Bearbeitungsstation, beispielsweise einer Deckelstation oder einer Palette genau ausgerichtet zugeführt werden.

Diese der Erfindung zugrundeliegende Aufgabe wird durch die Lehre des Hauptanspruches gelöst.

Vorteilhafte Aufgestaltungen der Erfindung sind in den Unteransprüchen erläutert.

Mit anderen Worten ausgedrückt wird vorgeschlagen, dass die beiderseits des Transportweges einander gegenüberliegend angeordneten Schwenkarmpaare übereinanderliegend angeordnet sind und dabei U-Bügel durchgreifen, deren einer Schenkel mit der Schwenkachse verbunden ist und deren anderer Schenkel den dieser Schwenkachse zugeordneten Schwenkarm trägt. Weiterhin werden die Schwenkarmpaare synchron angetrieben und sind so ausgebildet, daß die freien Enden jedes Schwenkarmes im wesentlichen bis zur Mitte der Transportvorrichtung ausschwenken können.

Alle vier Schwenkarme schwenken gleichzeitig um das gleiche Winkelmaß in den Bereich des Transportweges ein, ergreifen den ankommenden Behälter und drücken diese in die Mitte des Transportweges und in eine richtig ausgerichtete Stellung, beispielsweise bei einem ovalen Behälter, derart, daß die lange Achse des Ovals in Richtung der Förderrichtung der Transportvorrichtung ausgerichtet ist.

Um die Transportbewegung des Gebindes nicht zu stören, können an den in den Förderweg der Transportvorrichtung eingreifenden Enden der Schwenkarme Rollen angeordnet sein, die sich frei drehen können, aber es können hier auch Gleitpuffer vorgesehen sein, die zwar das Gebinde mit Druck beaufschlagen können, aber die Förderbewegung des Gebindes nicht behindern.

Die Schwenkbewegung der Schwenkarmpaare wird beispielsweise durch eine Fotozelle gesteuert, dahingehend, daß bei Ankunft des Gebindes an einer bestimmten Stelle der Transportvorrichtung, im Wirkungsbereich der Schwenkarme die Schwenkarme angetrieben werden und daß in einer bestimmten Stellung des dann ausgerichteten Gebindes die Schwenkarme wieder zurückschwenken und damit die Förderbewegung des Gebindes freigeben.

Obgleich vier Schwenkachsen vorgesehen sind, werden nur zwei Schwenkachsen angetrieben, und die nicht angetriebene Schwenkachse steht über an der angegriffenen Schwenkachse und an der nicht angetriebenen Schwenkachse angeordnete Zahnräder, die miteinander kämmen, indirekt mit der angetriebenen Schwenkachse in Wirkverbindung.

Als Antrieb dieser Einrichtung wird vorgeschlagen, daß mit jeder motorisch angetriebenen Schwenkachse Lenker verbunden sind, die an Arme eines schwenkbar gelagerten T-Stückes anschließen, an dessen Steg der Antrieb anschließt, wobei vorzugsweise ein Elektromotor als Antrieb dient, aber auch jedes andere Antriebsmittel einsetzbar ist.

Ein Ausführungsbeispiel der Erfindung wird nachfolgend anhand der Zeichnungen erläutert. Die Zeichnungen zeigen dabei in
- Fig. 1: eine schaubildliche Ansicht der erfindungsgemäßen Vorrichtung, in
- Fig. 2: eine Ansicht von unten auf die die Schwenkarme antreibende Steuerungsvorrichtung, in
- Fig. 3: eine Draufsicht auf eine erfindungsgemäße Anordnung ohne Gebinde, in
- Fig. 4: eine Draufsicht gemäß Fig. 3 mit einem noch nicht ausgerichteten Gebinde und in
- Fig. 5: eine Anordnung gemäß Fig. 4, bei der nunmehr das Gebinde ausgerichtet ist, aber die Schwenkarme noch nicht zurückgestellt sind.

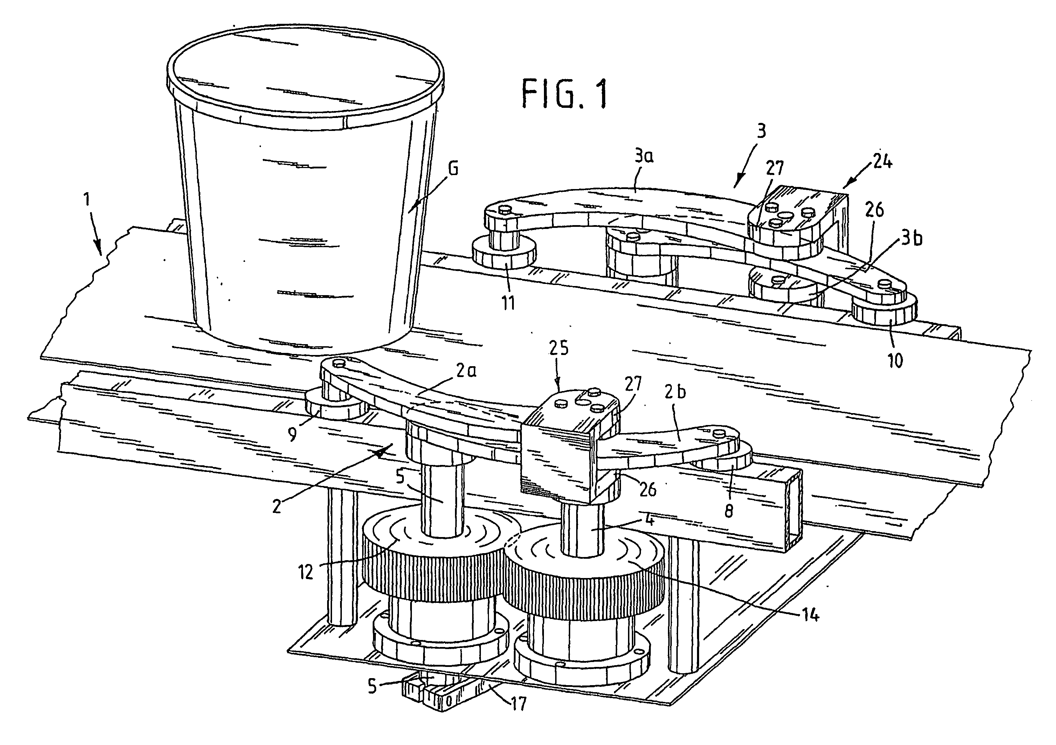

In Fig. 1 ist eine Transportvorrichtung 1 dargestellt, die bei dem dargestellten Ausführungsbeispiel aus Übersichtlichkeitsgründen als Förderband dargestellt ist, wobei selbstverständlich hier auch ein Rollenförderer eingesetzt werden kann, der ein Verschieben des auf der Fördervorrichtung 1 angeordneten Gebindes G erleichtert.

Beiderseits dieser Fördervorrichtung sind Schwenkarmpaare 2, 3 angeordnet, wobei das Schwenkarmpaar 2 zwei Schwenkarme 2a und 2b aufweist und das Schwenkarmpaar 3 Schwenkarme . 3a und 3b.

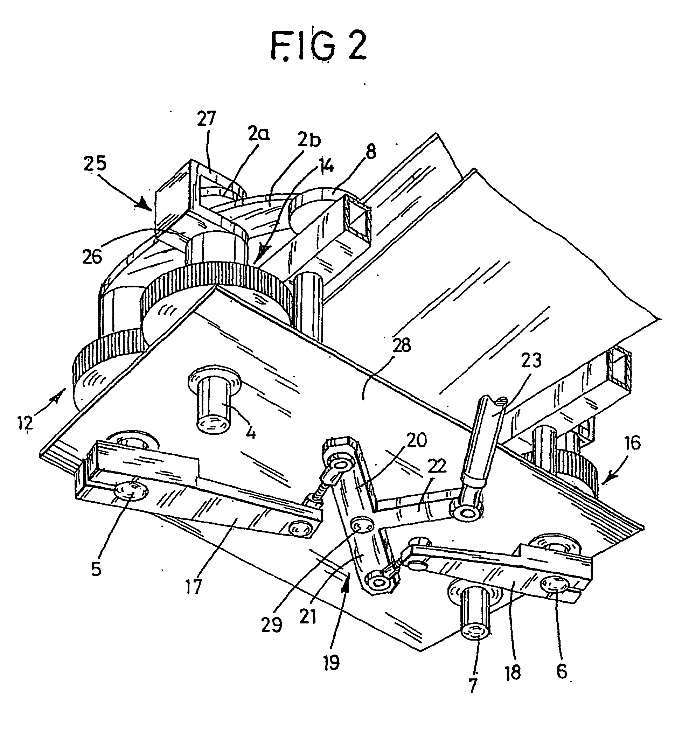

Die Schwenkarme schließen an Schwenkachsen 4, 5 bzw. 6, 7 (Fig. 2) an und tragen an ihren freien Enden frei drehbare Laufrollen 8, 9 bzw. 10, 11.

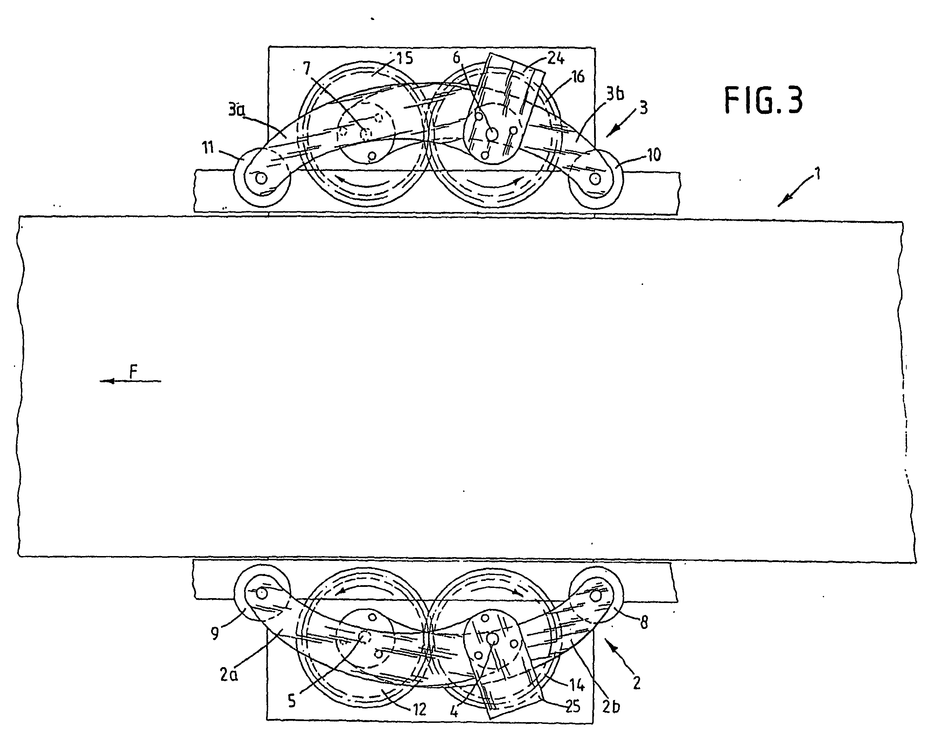

Fig. 3 läßt erkennen, dass der Schwenkarm 3a mit der Schwenkachse 6 über einen Bügel 24 verbunden ist und der Schwenkarm 3b unmittelbar auf der Schwenkachse 7 angeordnet ist. Auch der Schwenkarm 2a ist mit einem Bügel 25 verbunden und der Schwenkarm 2b unmittelbar mit der Schwenkachse 5, wobei die Schwenkachsen 4 und 5 über miteinander kämmenden Zahnrädern 12, 14 in Kontakt stehen, während die Schwenkachsen 6, 7 über miteinander kämmende Zahnräder 15 und 16 miteinander in Kontakt stehen.

Fig. 1 läßt erkennen, dass jeder Bügel 25 bzw. 24 als U-Bügel ausgebildet ist und einen oberen Schenkel 27 und einen unteren Schenkel 26 aufweist, wobei der obere Schenkel 27 den diesen Bügel zugeordneten Schwenkarm 2a bzw. 3a trägt, während der untere Bügel 26 mit der zugeordneten Schwenkachse 4 bzw. 6 verbunden ist. Durch Betätigen dieser Schwenkachse wird also sowohl der Bügel wie auch der zugeordnete Arm geschwenkt.

Die Schwenkarme 2a und 2b bzw. 3a und 3b sind übereinanderliegend angeordnet und der nicht von dem Bügel 24 bzw. 25 getragene Schwenkarm 3b bzw. 2b durchgreift diesen U-förmigen Bügel.

Fig. 2 zeigt von unten gesehen eine bevorzugte Ausführungsform des Antriebes für die Schwenkarme.

An der Unterseite einer Tragplatte 28 ist schwenkbar um eine Achse 29 ein T-Stück 19 gelagert, an dessen beiden Armen 20 und 21 Lenker 17 und 18 anschließen, die anderenendes an den angetriebenen Schwenkachsen 5 und 6 anschließen. Ein Steg 22 des T-Stückes 19 trägt eine Antriebsstange 23, an die ein in der Zeichnung nicht dargestellter Antriebsmotor wirksam angeschlossen ist.

Die nur mittelbar angetriebenen Schwenkachsen 4 und 7 sind in der Zeichnung erkennbar und werden über die miteinander kämmenden Zahnräder, beispielsweise 12 und 14 bzw. 15 und 16, angetrieben.

Aus dieser Darstellung in Fig. 2 ist erkennbar, dass bei Betätigen der Antriebsstange 23 eine Schwenkbewegung des T-Stückes 19 erfolgt und hierdurch ein Schwenken der Lenker 17 und 18 und dadurch bedingt eine Drehbewegung der direkt angetriebenen Schwenkachsen 5 und 6.

Weiterhin wird aus diesen Erläuterungen ersichtlich, dass der Antrieb der Schwenkarme vollkommen synchron erfolgt, d. h. alle vier Schwenkarme 2a und 2b bzw. 3a und 3b machen die gleichgroße Bewegung entweder zur Mitte der Transportvorrichtung 1 hin gerichtet oder bei der von der Mitte weg gerichteten Rückwärtsbewegung.

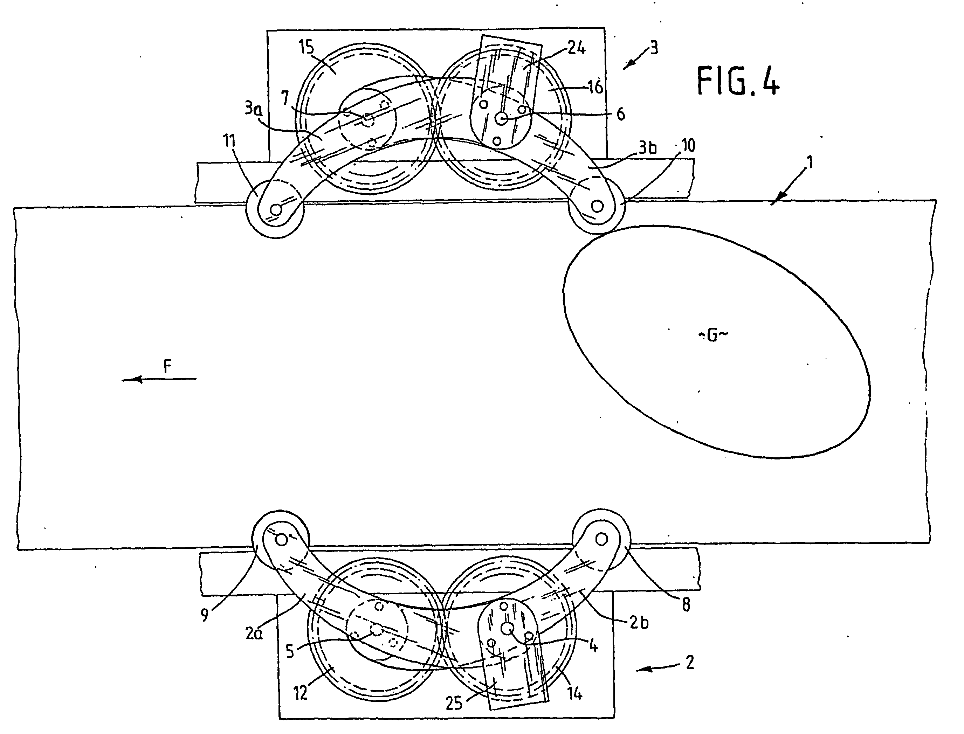

Fig. 4 zeigt ein Gebinde G, das "nicht ausgerichtet" über die Transportvorrichtung 1 der erfindungsgemäßen Vorrichtung zugeführt wird. Aufgrund eines Steuerungssignales, beispielsweise über eine Lichtquelle oder eine sonstige Fühlereinrichtung, wird nunmehr die Antriebsstange 23 betätigt und dadurch schwenken die Schwenkarmpaare 2 und 3 aus ihrer Ruhestellung in den Weg der Transportvorrichtung 1, und es ist erkennbar, dass bei der dargestellten Ausführungsform in Fig. 4 die Kontaktrolle 10 als erstes mit dem Gebinde G in Kontakt kommt und nunmehr die Vorderseite des Gebindes G in die Mitte der Transportvorrichtung 1 drückt. Gleichzeitig wird das Gebinde G weitergefördert in Richtung des Pfeiles F, und irgendwann kommt dann auch die Kontaktrolle 8 mit dem Gebinde G in Kontakt und drückt nunmehr weiterhin das Gebinde G in die richtige Lage.

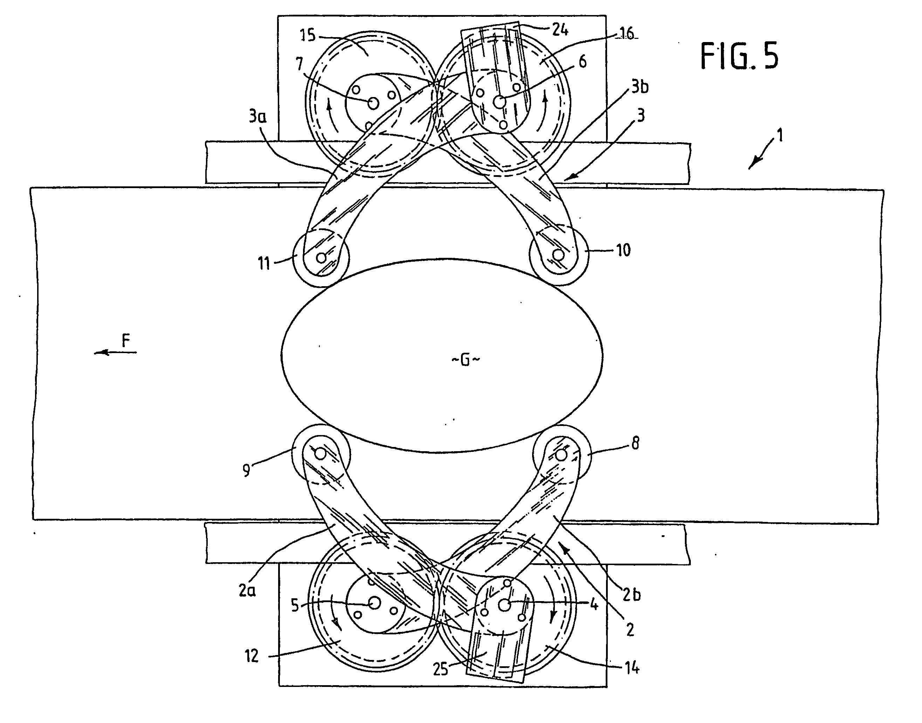

Fig. 5 zeigt, wie das Gebinde voll ausgerichtet und von allen Kontaktrollen 8, 9 bzw. 10, 11 berührt auf der Mitte der Transportvorrichtung 1 steht. Unmittelbar nach dieser Stellung werden sich die Schwenkarme 2a und 2b bzw. 3a und 3b zurückziehen und das Gebinde G kann zur nachfolgenden Bearbeitungsstation, beispielsweise eine Deckelstation od. dgl. gefördert werden.

## Patentansprüche

1. Vorrichtung zur Gebindeausrichtung mit einer die Gebinde fördernden Transportvorrichtung, beiderseits des Transportweges einander gegenüberliegend angeordnete Schwenkarmpaare (2, 3) mit Schwenkarmen (2a, 2b) und (3a, 3b), wobei die Schwenkarme (2a, 2b; 3a, 3b) jedes Schwenkarmpaares (2, 3) übereinanderlliegend angeordnet sind, **dadurch gekennzeichnet, daß** die Schwenkarme (2a, 2b; 3a, 3b) U-Bügel (24, 25) durchgreifen, deren einer Schenkel (26) mit der Schwenkachse (4) bzw. (6) verbunden ist und deren anderer Schenkel (27) den dieser Schwenkachse (4, 6) zugeordneten Schwenkarm (2a, 3a) trägt, wobei die Schwenkarmpaare (2, 3) synchron antreibbar sind und die Schwenkarme (2a, 2b; 3a, 3b) jeweils einenendes ihre Schwenkachse (4, 5, 6, 7) aufweisen und das freie Ende anderenendes im wesentlichen bis zur Mitte der Transportvorrichtung (1) ausschwenken kann.

2. Vorrichtung nach Anspruch 1, **dadurch gekennzeichnet, dass** die Schwenkachsen (4, 5) bzw. (6, 7) jedes Schwenkarmpaares (2) bzw. (3) miteinander kämmende Zahnräder (12, 14) bzw. (15,, 16) tragen.

3. Vorrichtung nach Anspruch 1 oder 2, **dadurch gekennzeichnet, dass** jeweils eine Schwenkachse (5) bzw. (6) angetrieben ist.

4. Vorrichtung nach einem oder mehreren der vorhergehenden Ansprüche, **gekennzeichnet durch** mit der angetriebenen Schwenkachse (5) bzw. (6) verbundene Lenker (17, 18), die an Arme (20, 21) eines schwenkbar gelagerten T-Stückes (19) anschließen, an dessen Steg (22) der Antrieb anschließt.

## Claims

1. Device for aligning containers, comprising a transport device conveying the containers and swivel arm pairs (2, 3) with swivel arms (2a, 2b) and (3a, 3b) arranged opposite one another on either side of the transport path, the swivel arms (2a, 2b; 3a, 3b) of each swivel arm pair (2, 3) being arranged one on top of the other, **characterised in that** the swivel arms (2a, 2b; 3a, 3b) pass through U-shaped brackets (24, 25), one leg (26) of which is connected to the swivel axis (4) or (6) and the other leg (27) of which carries the swivel arm (2a, 3a) associated with this swivel axis (4, 6), wherein the swivel arm pairs (2, 3) can be driven synchronously, the swivel arms (2a, 2b; 3a, 3b) are each provided at one end with their swivel axis (4, 5, 6, 7) and the free end at the other end can swing out substantially to the centre of the transport device (1).

2. Device according to claim 1, **characterised in that** the swivel axes (4, 5) or (6, 7) of each swivel arm pair (2) or (3) carry meshing gears (12, 14) or (15, 16).

3. Device according to claim 1 or claim 2, **characterised in that** one swivel axis (5) or (6) is driven in each case.

4. Device according to one or more of the preceding claims, **characterised by** links (17, 18) connected to the driven swivel axis (5) or (6) and connected to arms (20, 21) of a swivel-mounted T-piece (19) to the crosspiece (22) of which the drive is connected.

## Revendications

1. Dispositif pour l'orientation de récipients avec un dispositif de transport acheminant les récipients, des paires de bras pivotants (2, 3) disposées de part et d'autres du trajet de transport et se faisant face avec des bras pivotants (2a, 2b et 3a, 3b), dans lequel les bras pivotants (2a, 2b ; 3a, 3b) de chaque paire de bras pivotants (2, 3) sont disposés l'un au-dessus de l'autre, **caractérisé en ce que** les bras pivotants (2a, 2b ; 3a, 3b) traversent des étriers en forme de U (24, 25) dont un bras (26) est relié à l'axe de pivotement (4 ou 6) et dont l'autre bras (27) porte le bras pivotant (2a, 3a) associé à cet axe de pivotement (4, 6), les paires de bras pivotants (2, 3) pouvant être entraînées de manière synchrone et les bras pivotants (2a, 2b ; 3a, 3b) présentant chacun à une extrémité leur axe de pivotement (4, 5, 6, 7) et pouvant pivoter à leur autre extrémité libre sensiblement jusqu'au milieu du dispositif de transport (1).

2. Dispositif selon la revendication 1, **caractérisé en ce que** les axes de pivotement (4, 5 ou 6, 7) de chaque paire de bras pivotants (2 ou 3) portent des roues dentées (12, 14 ou 15, 16) s'engrenant l'une avec l'autre.

3. Dispositif selon la revendication 1 ou 2, **caractérisé en ce qu'**un axe de pivotement (5 ou 6) est entraîné.

4. Dispositif selon l'une ou plusieurs des revendications précédentes, **caractérisé en ce qu'**il comporte des bielles (17, 18) reliées à l'axe de pivotement (5 ou 6) entraîné, qui se raccordent aux bras (20, 21) d'un élément en T (19) supporté de façon pivotante, dont la traverse (22) est reliée à l'entraînement.
